# FASCICULE DE BREVET EUROPEEN

(11) **EP 0 274 317 B1**
(45) Date de publication et mention de la délivrance du brevet: **24.02.1993**
(21) Numéro de dépôt: 87402864.0
(22) Date de dépôt: 15.12.1987
(51) Int. Cl.: B29C 71/00

(54) **Procédé et installation d'extrusion d'un produit en forme de film, de plaque, de tube, de tige ou de fil**
Verfahren und Einrichtung zum Extrudieren eines Gegenstandes in Form eines Filmes, eines Rohres, einer Stange oder eines Fadens
Process and device for extruding a product in the form of a film, plate, tube, bar or thread

(30) Priorité: 15.12.1986 FR 8617472
(43) Date de publication de la demande: 13.07.1988
(73) Titulaire: SOLOMAT PARTNERS L.P., Stamford, CT 06906 (US)
(72) Inventeur: Ibar, Jean-Pierre, Ballainvilliers Essonne (FR)
(74) Mandataire: W.P. THOMPSON & CO.

(56) Documents cités:
- EP-A- 0 195 591
- DE-A- 1 602 333
- DE-B- 1 937 238
- FR-A- 2 320 170
- US-A- 3 205 289
- US-A- 3 275 730
- US-A- 3 883 631
- US-A- 4 288 398

## Description

La présente invention concerne un procédé et une installation d'extrusion d'un produit en forme de film, de plaque, de tube, de tige au de fil.

La présente invention se propose de créer des moyens permettant d'extruder et de traiter un produit en continu pour soumettre chaque tranche du produit défilant dans l'installation à des conditions de pression, de température et de fréquence d'une vibration, modifiant la structure morphologique et, par conséquent, les propriétés physicochimiques du produit en faisant varier ces conditions de pression, de température et de fréquence suivant un programme prédéterminé pour effectuer sur le produit un traitement rhéologique en continu.

Il est à remarquer que la structure morphologique du produit se définit notamment par le degré de cristallisation, la texture, le type de cristal, la forme du cristal, la dimension des cristaux, la forme élémentaire du cristal, la structure interlamellaire, l'orientation déterminée par la nature des liaisons et la forme des macromolécules, et en particulier dans le cas de matières plastiques amorphes, le "volume libre", le volume libre total et la structure du volume libre, ces deux éléments déterminant l'importance des contraintes internes existant dans le produit à l'état vitreux et probablement la ductilité du produit.

Les propriétés physicochimiques du produit sont notamment ses propriétés mécaniques, c'est-à-dire la résistance aux chocs, la ductilité, le module d'élasticité, le comportement au fluage, la résistance à la fatigue.

Les propriétés électriques sont notamment la tension de claquage, la conductance, les pertes de charge et la résistance à l'isolation.

Les propriétés thermiques définissent la température d'utilisation, la résistance au vieillissement physique (lorsque le matériau est recuit), ou sa résistance à la corrosion, à l'oxydation et aux agents corrosifs.

Il est déjà connu de modifier les caractéristiques physicochimiques d'un produit en lui faisant subir des variations de pression, de température et de fréquence suivant un programme préétabli en fonction des variations à obtenir.

Toutefois, de telles opérations ne se font actuellement que sur des échantillons de produits et non pas de manière continue sur un produit en forme de tube, de film ou de tige qui traverserait une installation.

La présente invention a pour but de créer des moyens permettant d'effectuer un tel traitement en continu.

A cet effet, l'invention concerne un procédé d'extrusion d'un produit de type ci-dessus, caractérisé en ce qu'on fait passer le produit dans des zones de traitement dans lesquelles règnent des conditions de pression, de température et de fréquence de vibration établies suivant un programme déterminé, pour effectuer sur le produit un traitement rhéologique en continu, pour appliquer ces conditions de pression, de température et de fréquence de vibration à la tranche se trouvant dans cette zone, de manière à faire parcourir toutes les zones à chaque tranche du produit.

L'invention concerne également une installation pour la mise en oeuvre de ce procédé, installation caractérisée en ce qu'elle comprend un ensemble d'étages successifs traversé par le produit à traiter et pour soumettre chaque tranche de produit aux conditions particulières de pression, de température et de fréquence définies dans cet étage par le programme de traitement rhéologique, chaque étage traversé par le produit se composant d'une partie extérieure et/ou d'une partie intérieure dans lesquelles passe le produit.

Suivant une autre caractéristique de l'invention, la partie extérieure est formée par une couronne périphérique fixe constituant une surface de guidage et qui applique à la surface extérieure du produit la température correspondant à cet étage et la partie intérieure se compose d'un équipage rotatif comprenant des galets tournant contre la surface interne de la tranche du tube en cours de traitement, ces galets étant soumis à la pression exercée par une chambre de pression pour exercer sur la surface interne de la tranche du produit la pression et la fréquence correspondant à cet étage, le nombre de galets et la vitesse de rotation de ces galets sur la surface interne de la tranche étant choisis pour obtenir la fréquence et la pression exercée par la chambre de pression sur les galets étant la pression de l'étage.

Suivant une autre caractéristique de l'invention, l'équipage rotatif de la partie intérieure se compose de pignons épicycloïdaux entraînés à partir d'un axe commun à au moins une partie des étages.

Suivant une autre caractéristique de l'invention, chaque étage est constitué par un équipage rotatif dont le centre est traversé par le produit à traiter, cet équipage rotatif étant constitué par un ensemble de galets intérieurs logés dans une chambre de pression périphérique, l'ensemble étant entraîné en rotation à partir d'un axe d'entraînement extérieur, le nombre de galets et la vitesse de rotation de ces galets à la surface de la tranche du produit à traiter correspondant à la fréquence de l'étage, la pression régnant dans la chambre de pression et qui est exercée sur le produit par l'intermédiaire des galets étant la pression de cet étage et les galets sont mis à la température de l'étage.

Selon une autre autre caractéristique de l'invention la partie intérieure et/ou la partie extérieure de chaque étage comporte un manchon coopérant directement avec la surface extérieure et/ou la surface intérieure du produit à traiter, ce manchon étant muni d'au moins un chemin de circulation au moins partiellement muni d'une ouverture du côte en regard du produit à traiter, et contenant des organes de roulement venant partiellement en saillie par l'ouverture du chemin de circulation pour venir s'appliquer contre la surface du produit à traiter.

Suivant le cas, l'installation comporte un manchon coopérant avec la surface extérieure ou un manchon coopérant avec la surface intérieure ou encore deux manchons coopérant respectivement avec la surface extérieure et la surface intérieure du produit à traiter.

Bien que l'installation soit conçue de préférence pour traiter des tubes ou des tiges, c'est-à-dire des produits creux ou des produits plats, et en particulier des produits de grande longueur assimilables à des produits défilant en continu dans l'installation, l'invention s'applique dans les mêmes conditions au traitement de produits de longueur relativement faible. De la même manière, l'installation permet de traiter des produits en film ou en plaque ; dans ce cas, il suffit simplement d'assimiler le manchon extérieur ou intérieur à un cylindre de section circulaire et de rayon infiniment grand.

Extérieurement ou intérieurement au manchon suivant que le manchon appartient à la partie extérieure ou à la partie intérieure, l'installation peut comporter des moyens de mise en pression ou des moyens pour appliquer un fluide de climatisation (refroidissement, chauffage) pour définir de manière précise les conditions de pression, de température et de fréquence correspondant au programme de traitement rhéologique.

Le chemin de circulation présente un tracé du moins dans ses parties actives, correspondant au traitement à réaliser sur le produit.

Suivant une caractéristique intéressante, le chemin de circulation est en forme de méandres comprenant des segments avec des retours, et au moins certains des segments sont munis d'une ouverture du côté du produit à traiter.

Ce chemin de circulation en méandres peut occuper toute la surface du manchon.

Suivant une caractéristique particulière, les segments ouverts sont des segments longitudinaux par rapport à l'axe du manchon.

De manière particulièrement simple, les segments longitudinaux s'étendent suivant des génératrices du cylindre définissant le manchon et un segment sur deux est ouvert de sorte que les organes de roulement circulent tous dans la même direction.

Suivant une caractéristique particulièrement intéressante, les organes de roulement sont des billes.

Bien que, de manière générale, les billes puissent circuler par simple contact avec le produit à traiter, il peut être intéressant, dans certains cas, que les billes, ou plus généralement les organes de roulement, soient entraînées de l'extérieur pour exercer sur le produit une force d'accélération ou de freinage.

Suivant une solution particulièrement simple, la propulsion des organes de roulement est assurée par un fluide et, à cet effet, le manchon comporte un boîtier de distribution de fluide de propulsion communiquant avec le chemin de circulation pour y injecter un fluide de propulsion.

Suivant une autre caractéristique de l'invention, les billes se composent de billes actives de grand diamètre et de billes intercalaires de petit diamètre, les billes de grand diamètre venant en saillie des segments ouverts du chemin en méandres alors que les billes de petit diamètre assurent la séparation des billes de grand diamètre.

Suivant une autre caractéristique de l'invention, l'installation présente une structure modulaire et chaque étage est constitué d'un bloc équipé d'au moins un manchon.

Enfin, pour transmettre la pression à exercer contre la surface intérieure ou la surface extérieure du produit à traiter, il est intéressant que le diamètre du manchon soit variable pour que le manchon puisse transmettre les efforts destinés au produit à traiter.

La présente invention sera décrite de façon plus détaillée à l'aide des dessins annexés dans lesquels :
- la figure 1A montre schématiquement le procédé selon l'invention, appliqué à la fabrication d'un produit en forme de tube,
- la figure 1B montre schématiquement le procédé selon l'invention appliqué à la fabrication d'un produit en forme de tige,
- la figure 2A montre schématiquement une installation pour la mise en oeuvre du procédé de la figure 1A,
- la figure 2B montre schématiquement une installation pour la mise en oeuvre du procédé de la figure 1B,
- les figures 3 et 4 sont deux schémas en coupe transversale et en coupe axiale d'un exemple d'installation selon le schéma de principe de la figure 2A,
- la figure 5 est une graphique montrant les variations de pression en fonction du temps,
- la figure 6 est une vue schématique d'un manchon d'une installation de traitement suivant l'invention,
- la figure 7 est une vue de détail, développée, d'une partie du manchon de la figure 6, montrant le chemin de circulation de billes,
- la figure 8 est un schéma d'une partie d'un chemin de circulation, selon une variante de réalisation de l'invention,
- la figure 9 est une vue de l'extrémité d'un manchon muni d'un boîtier d'injection de fluide de propulsion des organes de roulement,
- la figure 10 est une vue en coupe schématique d'un étage de traitement muni d'un manchon extérieur et d'un manchon intérieur selon l'invention,
- la figure 11 est une vue en perspective d'un module d'une installation selon l'invention.

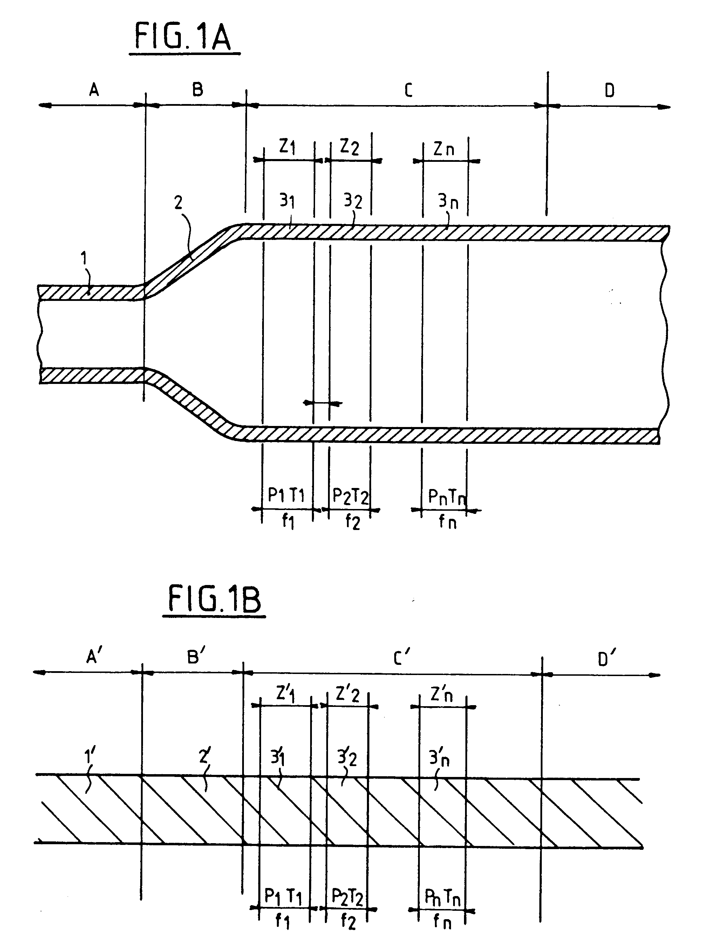

Selon la figure 1A, le procédé selon l'invention, appliqué à la fabrication d'un produit en forme de tube (ou de nappe) consiste à extruder (A) un tube 1 puis à augmenter (B) le cas échéant, son diamètre 2, puis à faire passer (C) ce tube 3 dans des zones (Zn) successives de traitement dans lesquelles on fait régner des conditions de pression (Pn) de température (Tn) et de fréquence (fn) établies suivant un programme prédéterminé pour effectuer sur le produit un traitement rhéologique en continu.

En sortie (D) de procédé, le produit 3 obtenu est alors laissé en forme de tube ou est coupé longitudinalement pour former une nappe ; dans l'un et l'autre cas, le produit est enroulé ou est découpé en segments.

La figure 1B montre schématiquement l'application du procédé de l'invention à la fabrication d'un produit en forme de tige qui, dans le cas le plus simple, présente une section circulaire.

De façon analogue au procédé décrit ci-dessus, on extrude (A') un produit 1' en forme de tige (produit plein) dont on modifie (B') éventuellement la section 2', puis on fait passer (C') le produit 3' dans des zones de traitement (Z'n) dans lesquelles règnent des conditions de pression, de température et de fréquence (Pn, Tn, fn) prédéterminées suivant un programme de traitement permettant d'appliquer au produit un traitement rhéologique en continu.

En sortie (D'), le produit 3' est sectionné à la longueur voulue ou est enroulé.

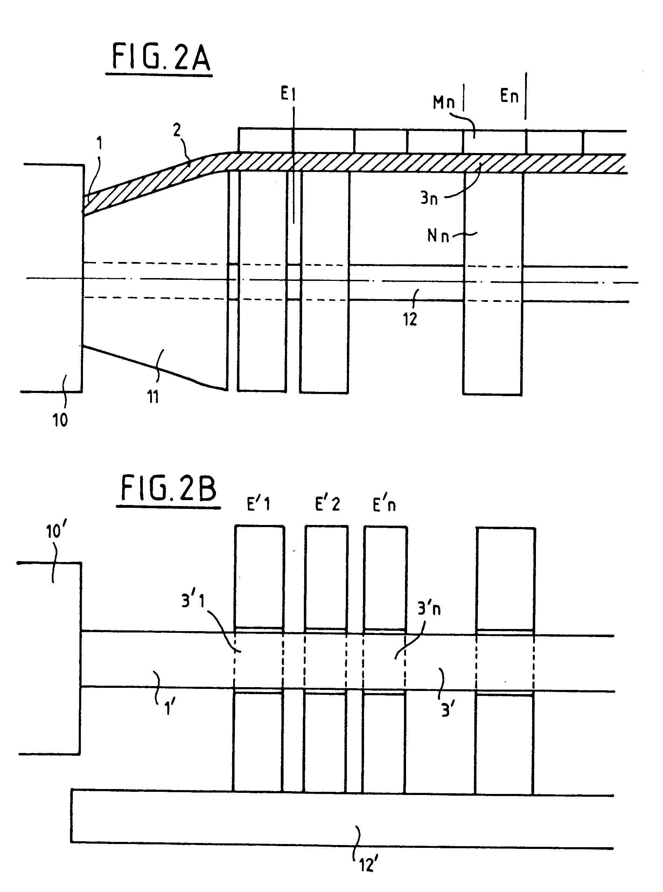

La figure 2A montre, schématiquement, une installation pour la mise en oeuvre du procédé selon la figure 1A.

Cette installation se compose d'une extrudeuse 10 représenté schématiquement.

Le cas échéant, cette extrudeuse alimente directement la partie aval de l'installation constituée d'une succession d'étages, comme cela sera décrit ci-après.

Dans certains cas, l'extrudeuse 10 est suivie d'un organe élargisseur 11 qui augmente le diamètre de tube extrudé plus que l'augmentation naturelle du diamètre du tube à la sortie de l'extrudeuse.

On obtient ainsi un tube 3 de plus grand diamètre éventuellement de diamètre correspondant au diamètre final. Cet élargisseur 11 est intéressant dans certains cas pour donner une orientation initiale au produit extrudé, avant que ne soit effectué le traitement rhéologique.

A la suite, l'installation comporte une succession d'étages E₁ ... En ... correspondant aux zones Zn du programme du procédé de traitement rhéologique.

Chaque étage En se compose d'une partie extérieure Mn et d'une partie intérieure Nn qui coopèrent.

La partie extérieure Mn agit sur la surface extérieure de la tranche 3n du produit 3 et la partie intérieure Nn agit sur la surface intérieure de la tranche 3n.

Suivant un mode de réalisation avantageux, la partie extérieure Mn est une couronne périphérique dans laquelle règne la température Tn de manière à mettre la couronne de produit (tranche portant la référence 3n) à la température Tn. Cette partie extérieure Mn a une résistance mécanique suffisante pour que la partie intérieure Nn puisse induire dans la tranche 3n du produit 3, la pression Pn et la fréquence fn par l'intermédiaire de la partie intérieure Nn. Il est à souligner que la température Tn de la partie Mn et la pression Pn et la fréquence fn induites par la partie Nn sont définies indépendamment des paramètres correspondants des autres étages Ej.

Bien que schématiquement, la structure de l'installation de la figure 2A soit cylindrique (c'est-à-dire conserve au produit la même section) il est également envisageable d'augmenter cette section suivant un profil prédéterminé, tenant compte des paramètres Pn, Tn, fn.

La figure 2B montre un exemple d'installation pour la mise en oeuvre du procédé de la figure 1B.

De façon analogue à l'installation de la figure 2A, cette installation se compose d'une extrudeuse 10' formant un produit plein 1' (en tige).

En aval de l'extrudeuse, l'installation se compose d'étages E'₁ ... E'ₙ ... pour appliquer aux différentes zones 3'n du produit 3', le traitement rhéologique, c'est-à-dire les pression Pn, température Tn et fréquence fn suivant le programme prédéterminé. Il convient de souligner que, dans cette installation également les différents étages E'n sont indépendants quant à la valeur des paramètres Pn, Tn, fn.

Dans cette installation, l'action des paramètres Pn, Tn, fn se fait uniquement par la face extérieure du produit 3' (3'n).

De façon particulièrement avantageuse, les étages En, E'n des installations selon les figures 2A, 2B sont rotatifs à la fois pour assurer une meilleure uniformité dans l'application de la pression et de la température Pn, Tn et pour exercer la fréquence fn.

Dans le cas de l'installation de la figure 2A, cette commande en rotation peut être assurée à partir d'un axe central 12 entraînant les différentes parties intérieures Nn à des vitesses de rotation déterminées, les parties extérieures Mn étant fixes dans le cas le plus simple ou également rotatives.

Dans le cas de l'installation de la figure 2B, la commande d'entraînement en rotation est assurée par un axe extérieur 12ʹ transmettant son mouvement aux équipages rotatifs des étages Eʹn.

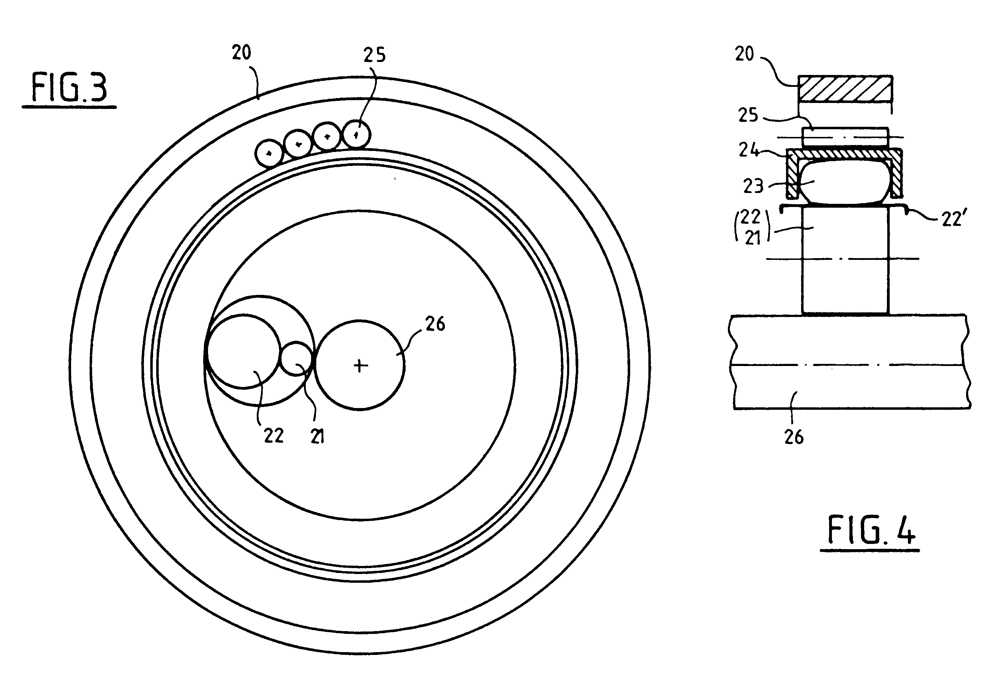

Les figures 3, 4 montrent un exemple de réalisation d'un étage En de l'installation de la figure 2A.

La partie extérieure Mn est constituée par une couronne 20 fixe formée par des éléments chauffants ou à effet Peltier ou par une chambre recevant un fluide caloporteur réglant la température Tn de cette partie extérieure Mn.

La partie intérieure Nn est une structure rotative de type épicycloïdal formée d'un ensemble de pignons 21, 22 logé dans une couronne extérieure 22ʹ, entourée par une chambre de pression 23 ; cette chambre est logée dans une cage 24 périphérique portant des galets 25 qui transmettent la pression au produit (non représenté). Le nombre des galets 25, la vitesse de circulation de ces galets 25 (par l'intermédiaire des pignons 21, 22), la vitesse de rotation de l'axe central 26 sont choisis de manière à induire dans le produit une fréquence fn prédéterminée.

Il est à remarquer que les galets 25 en contact avec le produit et qui s'échauffent sous l'effet du roulement, peuvent être refroidis (ou même chauffés) suivant la température Tn à laquelle doit être le produit dans cet étage En.

La pression Pn suivant laquelle les galets 25 sont appliqués contre le produit, est déterminée par la pression régnant dans la chambre 23 ; cette chambre peut être constituée par une couronne torique dans laquelle est injecté un fluide à la pression voulue.

A la fin du traitement décrit ci-dessus, on procède à la stabilisation du produit et à sa protection contre le vieillissement. Pour cela, on soumet le produit à une radiation de type "rayonnement ultraviolet", "rayonnement gamma" ou rayonnement X".

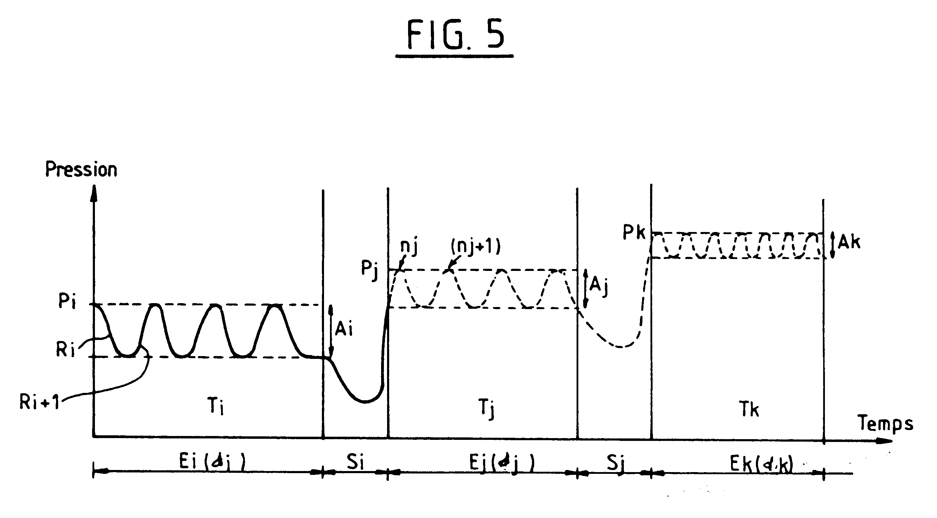

La figure 5 est un schéma montrant les variations de pression agissant sur une section de produit dans son passage à travers l'installation.

Le graphique donne la pression P en fonction du temps. En fait, comme l'installation travaille en continu, le temps peut également se représenter par la distance parcourue par une tranche du produit.

Selon la figure 5, les pressions sont représentées en ordonnées et les temps ou distances en abscisses.

Une tranche de produit traverse tout d'abord l'étage Ei de longueur de parcours di. Dans cet étage règne la température Ti et le produit est soumis à l'action de galets qui induisent des montées en pression jusqu'au niveau de pression Pi. Après l'action d'un galet avant l'action du galet suivant qui roule sur le produit, le produit se relaxe dans la partie Ri de la courbe puis la pression augmente de nouveau dans la partie Ri + 1 pour chuter de nouveau et ainsi de suite.

La variation de pression entre le maximum et le minimum correspond à une amplitude Ai.

A la suite de cet étage Ei, c'est-à-dire lorsque le dernier galet 25 est passé sur la tranche de produit, et avant que le premier galet de l'étage suivant n'attaque cette même tranche de produit (qui défile à travers l'installation), il y a un intervalle Si de longueur variable (qui peut être nul) dans laquelle le produit se relaxe. Puis, à l'entrée de l'étage Ej suivant, (j = i + 1), la pression augmente de nouveau pour passer au niveau Pj de pression exercée par les galets. A l'intérieur de cet étage Ej, la succession des galets traitant la tranche de produit crée une montée et une chute de pression d'amplitude Aj et de fréquence correspondant à la vitesse de rotation multipliée par le nombre de galets.

La largeur dj de cet étage Ej peut être égale ou différente de la largeur di de l'étage précédent.

A la suite de cet étage Ej, il y a de nouveau un intervalle Sj de largeur choisie avant que la tranche de produit n'arrive dans l'étage suivant Ek.

Le schéma de la figure 5 donne également à titre de rappel les températures Ti, Tj et Tk régnant dans les étages. La relation entre ces températures dépend du programme préétabli.

Il est important de remarquer que la vibration exercée par la mise en oeuvre du procédé d'extrusion de l'installation se fait dans les deux sens du produit. Il s'agit donc d'une vibration bidirectionnelle et la vibration dans les deux directions n'a pas les mêmes caractéristiques.

A titre d'autre remarque, on notera que les amplitudes Ai, Aj ... etc ... de variation de la pression dans chaque étage dépendent des paramètres Tn, Pn et fn.

De façon générale, la présente invention concerne une installation destinée à traiter un produit en forme de tube ou de tige, et plus généralement par extension géométrique (en ayant un cylindre de rayon infini) un produit en forme de film ou de plaque.

Bien que le traitement soit décrit ci-après comme étant appliqué à un produit de grande longueur ou continu, l'installation permet également de traiter des produits discontinus tels que des plaques ou des segments de tube ou de tige.

Enfin, en commandant l'installation ou les modules qui la composent, de manière appropriée, on peut effectuer le traitement de produits de section longitudinale non constante, par exemple un tube dont la forme présente localement des renflements ou des parties en retrait.

Selon l'invention, le produit doit passer dans des zones de traitement dans lesquelles règnent des conditions de pression, de température et de fréquence établies suivant un programme prédéterminé pour effectuer un traitement rhéologique.

Chaque tranche du produit traverse ainsi les différentes zones de traitement. Pour cela, l'installation est composée d'un ensemble d'étages successifs non représenté et chaque étage est traversé par le produit.

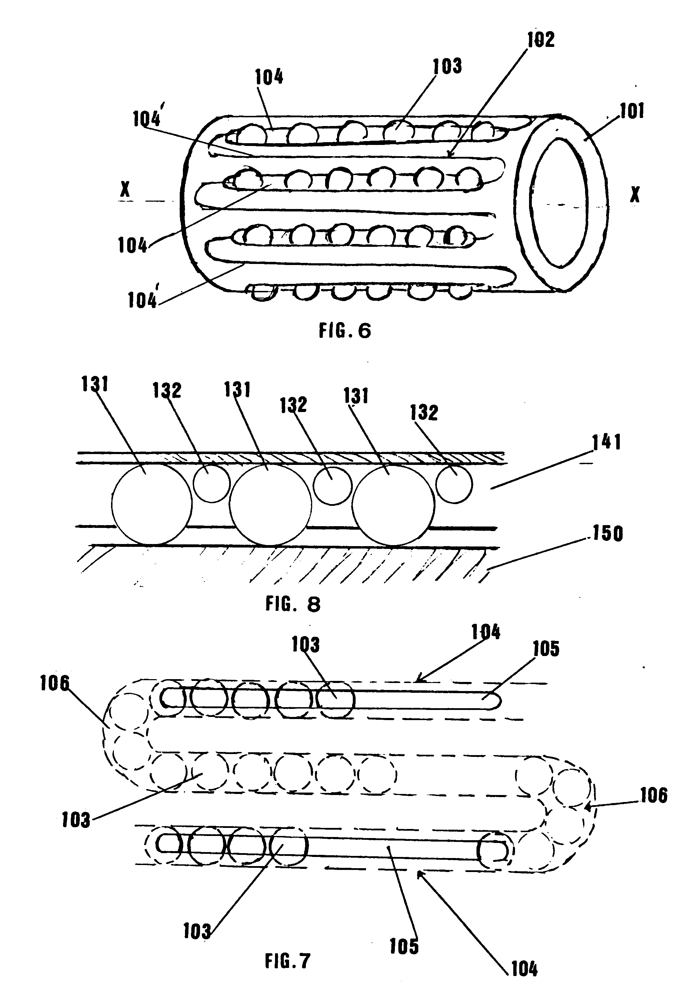

Selon un mode de réalisation, chaque étage comporte un manchon tel que celui représenté à la figure 6. Ce manchon peut s'appliquer soit sur la surface extérieure du produit, soit sur la surface intérieure soit sur les deux surfaces à la fois.

Selon les figures 6 et 7, le manchon représenté à titre d'exemple, et qui a l'aspect d'un épi de maïs, se compose d'une structure de support 101 dans laquelle est réalisé un chemin de circulation 102 en méandres dans lequel circulent des organes de roulement 103 en forme de billes.

Le chemin de circulation 102 a été figuré par un trait simple dans certaines de ses parties et par un trait double figurant une ouverture dans d'autres parties.

Ce chemin de circulation en méandres 102 se compose de segments 104, 104' de préférence longitudinaux c'est-à-dire parallèles à l'axe X-X du manchon ; au moins certains 104 des segments 104, 104' sont munis d'une ouverture 105 à travers laquelle les billes 103 viennent en saillie. Par contre, les segments 104', fermés, ne laissent pas paraître les billes à l'extérieur, les segments 104, 104ʹ sont reliés par des retours 106.

Au niveau des ouvertures 105, les billes 103 apparaissent partiellement alors que sur les autres parties du chemin de circulation, les billes sont cachées puisque le chemin de circulation est en retrait.

Selon le mode de réalisation préférentiel représenté, un segment sur deux est ouvert. Dans ces conditions, si les billes ne sont pas entraînées, elles rouleront à la surface du produit à traiter sans glisser sur cette surface. En même temps que les billes roulent, elles avancent dans le chemin de circulation. Comme un segment sur deux n'est pas ouvert, les billes qui circulent et tournent en sens inverse du sens de défilement du produit ne viennent pas en contact avec le produit et n'entraînent ni un freinage du produit ni un blocage de la circulation de l'ensemble des billes dans le chemin de circulation.

Bien que, suivant le mode de réalisation représenté ici, le chemin de circulation soit formé de segments longitudinaux, suivant les conditions de traitement à réaliser, le chemin de circulation peut avoir une forme différente. Il peut, par exemple, s'agir d'un chemin hélicoïdal par rapport au manchon. Ce chemin hélicoïdal peut parcourir toute la surface du manchon à la manière d'un filet de vis à pas très réduit et à une seule spire. Il peut également s'agir de segments hélicoïdaux s'étendant à la surface suivant un pas important, la jonction entre les segments hélicoïdaux se faisant comme dans le cas des segments longitudinaux, rectilignes, par les zones de retour 106.

La vue en coupe de la figure 8 montre de manière très schématique la disposition d'organes de roulement en forme de billes 131 dans le canal 141 d'un manchon non représenté en totalité. Les organes de roulement 131 sont séparés par des organes de roulement auxiliaires 132 formant organes séparateurs pour que les organes de roulement 131 ne roulent pas les uns sur les autres et se freinent.

Cette figure montre également la face du produit 150 sur laquelle roulent les billes 131 qui sont les billes actives.

Il est à remarquer que les billes actives 131 sont de grand diamètre et les billes intercalaires 132 de petit diamètre ; ce diamètre est toutefois suffisant pour qu'elles ne puissent, le cas échéant, sortir par l'ouverture du chemin de roulement.

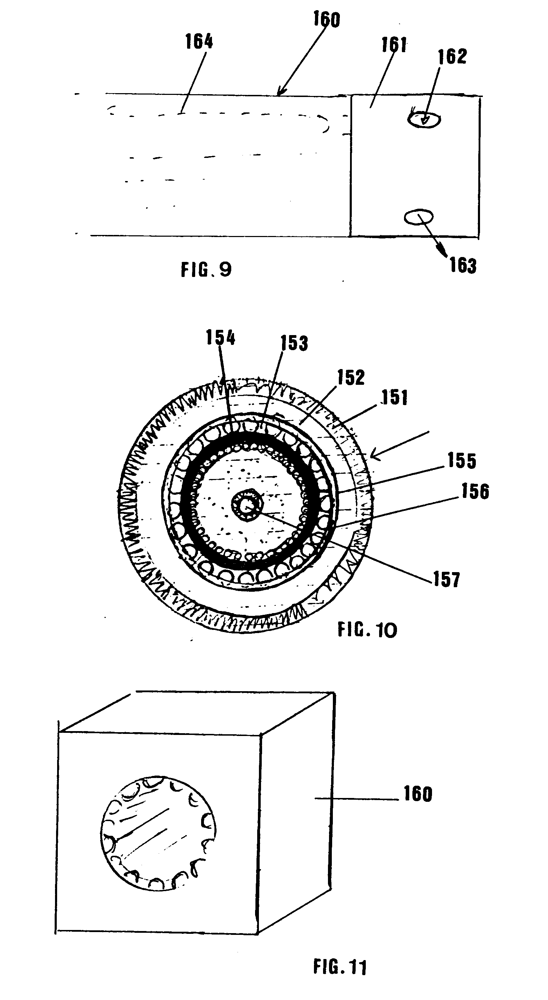

Selon la figure 9, le manchon 160 qui n'est représenté que schématiquement, comporte un boîtier de distribution de fluide 161 muni d'une alimentation 162 et d'une évacuation 163. On peut ainsi injecter du fluide (liquide ou air) dans le chemin de circulation des billes 164 schématisé par un trait en pointillés mais ne montrant pas les billes, de manière à entraîner les billes et les obliger à circuler de manière forcée dans le chemin de circulation roulant sur la surface du produit à traiter.

La figure 10 représente un dispositif selon l'invention avec une partie extérieure comprenant une cage 151, une chambre de pression 152, un manchon à circulation de billes 153 s'appuyant sur la face extérieure du produit tubulaire 154 à traiter. A l'intérieur, il est également prévu un manchon de type analogue à celui décrit ci-dessus. Ce manchon 155 s'applique contre la surface intérieur du tube 154 par les billes . Le manchon 155 est entraîné en rotation par des moyens 156 non représenté et l'ensemble est monté sur un axe 157.

Enfin, la figure 11 montre un élément modulaire 160, selon l'invention. Cet élément modulaire muni des moyens d'alimentation en fluide de chauffage ou de propulsion des billes ainsi que des moyens d'entraînement en rotation des différents éléments et billes cycloïdaux et hypocycloïdaux, permet une fabrication standardisée.

## Revendications

1. Procédé de traitement d'un produit (3₁...3ₙ; 3'₁...3'ₙ) en forme de tube (1), de tige (1'), caractérisé en ce qu'on fait passer le produit dans des zones (Z₁...Zₙ; Z'₁...Z'ₙ) de traitement dans lesquelles règnent des conditions de pression (P₁...Pₙ), de température (T₁...Tₙ) et de fréquence de vibration (f₁...fₙ) établies suivant un programme détermine, pour effectuer sur le produit un traitement rhéologique en continu, pour appliquer ces conditions de pression, de température et de fréquence de vibration à la tranche se trouvant dans cette zone, de manière à faire parcourir toutes les zones à chaque tranche du produit.

2. Installation pour la mise en oeuvre du procédé d'extrusion, selon la revendication 1, installation caractérisée en ce qu'elle comprend un ensemble d'étages (E₁...Eₙ; E'₁...E'ₙ) successifs traversé par le produit à traiter et pour soumettre chaque tranche de produit (3₁...3ₙ; 3'₁...3'ₙ) aux conditions particulières de pression (P₁...Pₙ), de température (T₁...Tₙ) et de fréquence de vibration (f₁...fₙ) définies dans cet étage par le programme de traitement rhéologique, chaque étage traversé par le produit se composant d'une partie extérieure (Mₙ) et/ou d'une partie intérieure (Nₙ) dans lesquelles passe le produit.

3. Installation selon la revendication 2, caractérisée en ce que la partie extérieure est formée par une couronne périphérique fixe (20) constituant une surface de guidage et qui applique à la surface extérieure du produit la température correspondant à cet étage, et en ce que la partie intérieure se compose d'un équipage rotatif comprenant des galets (25) tournant contre la surface interne de la tranche du tube en cours de traitement, ces galets étant soumis à la pression exercée par une chambre de pression (23) pour exercer sur la surface interne de la tranche du produit la pression et la fréquence de vibration correspondant à cet étage, le nombre de galets et la vitesse de rotation de ces galets sur la surface interne de la tranche étant choisis pour obtenir la fréquence de vibration et la pression exercée par la chambre de pression sur les galets étant la pression de l'étage.

4. Installation selon la revendication 3, caractérisée en ce que l'équipage rotatif de la partie intérieure se compose de pignons épicycloïdaux (21, 22) entraînés à partir d'un axe (26) commun à au moins une partie des étages.

5. Installation selon la revendication 2, pour la fabrication d'un produit en forme de tige, installation caractérisée en ce que chaque étage est constitué par un équipage rotatif dont le centre est traversé par le produit à traiter, cet équipage rotatif étant constitué par un ensemble de galets intérieurs (153) logés dans une chambre de pression périphérique (152), l'ensemble étant entraîné en rotation à partir d'un axe d'entraînement extérieur, le nombre de galets et la vitesse de rotation de ces galets à la surface de la tranche du produit à traiter correspondant à la fréquence de l'étage, la pression régnant dans la chambre de pression et qui est exercée sur le produit par l'intermédiaire des galets étant la pression de cet étage et les galets sont mis à la température de l'étage.

6. Installation selon la revendication 2, caractérisée en ce que la partie intérieure et/ou la partie extérieure de chaque étage comporte un manchon (101; 155) coopérant directement avec la surface extérieure et/ou la surface intérieure du produit à traiter, ce manchon étant muni d'au moins un chemin de circulation (102) au moins partiellement muni d'une ouverture (105) du côte en regard du produit à traiter, et contenant des organes de roulement (103; 131; 153; 164) venant partiellement en saillie par l'ouverture du chemin de circulation pour venir s'appliquer contre la surface du produit à traiter.

7. Installation selon la revendication 6, caractérisée en ce que le chemin de circulation (102) est en forme de méandres comprenant des segments (104, 104') avec des retours (106), et en ce qu'au moins certains (104) des segments sont munis d'une ouverture (105) du côté du produit à traiter.

8. Installation selon la revendication 7, caractérisée en ce que les segments ouverts (104) sont des segments longitudinaux par rapport à l'axe du manchon.

9. Installation selon la revendication 6, caractérisée en ce qu'un segment (104) sur deux du chemin est ouvert de sorte que les organes de roulement en saillie circulent tous dans la même direction.

10. Installation selon la revendication 6, caractérisée en ce que les organes de roulement sont des billes (103; 131; 153; 164).

11. Installation selon la revendication 6, caractérisée en ce que les organes de roulement sont propulsés à travers le chemin de circulation.

12. Installation selon la revendication 6, caractérisée en ce que le manchon comporte un boîtier (161) de distribution de fluide de propulsion communiquant avec le chemin de circulation pour y injecter un fluide de propulsion destiné à faire circuler les organes de roulement (164).

13. Installation selon la revendication 6, caractérisée en ce que les billes se composent de billes actives (131) de grand diamètre et de billes intercalaires (132) de petit diamètre, les billes de grand diamètre venant en saillie des segments ouverts (104) du chemin en méandres alors que les billes de petit diamètre assurent la séparation des billes de grand diamètre.

14. Installation selon la revendication 6, caractérisée en ce qu'elle présente une structure modulaire, chaque étage étant constitué d'un bloc équipé d'au moins un manchon.

15. Installation selon la revendication 6, caractérisée en ce que le diamètre du manchon est variable pour que le manchon puisse transmettre des efforts sur le produit à traiter.

## Claims

1. Process for treating a product (3₁...3ₙ; 3'₁...3'ₙ) in the shape of a tube (1) or rod (1'), characterised in that the product is caused to pass through treatment zones (Z₁...Zₙ; Z'₁...Z'ₙ) in which conditions of pressure (P₁...Pₙ), temperature (T₁...Tₙ) and vibration frequency (f₁...fₙ) set up in accordance with a defined programme prevail, so as to carry out a continuous rheological treatment on the product, so as to apply these conditions of pressure, temperature and vibration frequency to the length present in this zone, in such a manner as to cause each length of the product to travel through all the zones.

2. Installation for carrying out the extrusion process according to Claim 1, an installation characterised in that it comprises a set of successive stages (E₁...Eₙ; E'₁...E'ₙ) through which the product to be treated passes for subjecting each length of product (3₁...3ₙ; 3'₁...3'ₙ) to the particular conditions of pressure (P₁...Pₙ), temperature (T₁...Tₙ) and vibration frequency (f₁...fₙ) defined in that stage by the rheological treatment programme, each stage through which the product passes being composed an external part (Mₙ) and/or and internal part (Nₙ) through which the product passes.

3. Installation according to Claim 2, characterised in that the external part consists of a fixed peripheral ring (20) constituting a guide surface and touching the external surface of the product, the temperature corresponding to this stage, and in that the internal part is composed of rotary equipment comprising rollers (25) rotating against the internal surface of the length of tube undergoing treatment, these rollers being subjected to the pressure exerted by a pressure chamber (23) so as to exert, on the internal surface of the length of the product, the pressure and vibration frequency corresponding to this stage, the number of rollers and the speed of rotation of these rollers against the internal surface of the length being chosen so as to give the vibration frequency, and the pressure exerted by the pressure chamber on the rollers being the pressure of the stage.

4. Installation according to Claim 3, characterised in that the rotary equipment of the internal part consists of epicycloidal gear wheels (21, 22) driven from a shaft (26) which is common to at least some of the stages.

5. Installation according to Claim 2, for the manufacture of a product in the shape of a rod, an installation characterised in that each stage consists of rotary equipment through the centre of which passes the product to be treated, this rotary equipment consisting of a set of internal rollers (153) seated in a peripheral pressure chamber (152), the assembly being driven rotationally from an external drive shaft, the number of rollers and the speed of rotation of these rollers at the surface of the length of product to be treated corresponding to the frequency of the stage, the pressure prevailing in the pressure chamber and exerted on the product via the rollers being the pressure of this stage and the rollers being held at the temperature of the stage.

6. Installation according to Claim 2, characterised in that the internal part and/or the external part of each stage comprises a sleeve (101; 155) cooperating directly with the external surface and/or the internal of the product to be treated, this sleeve being equipped with at least one track (102) which is at least partially equipped with an orifice (105) on the side facing the product to be treated, and containing rolling devices (103; 131, 153; 164) which partially project through the orifice in the track so as to rest against the surface of the product to be treated.

7. Installation according to Claim 6, characterised in that the track (102) is of meandering shape comprising segments (104, 104') with return portions (106), and in that at least some (104) of the segments are provided with an orifice (105) on the side of the product to be treated.

8. Installation according to Claim 7, characterised in that the open segments (104) are segments which are longitudinal with respect to the axis of the sleeve.

9. Installation according to Claim 6, characterised in that one segment (104) out of two in the track is open so that the projecting rolling devices all travel in the same direction.

10. Installation according to Claim 6, characterised in that the rolling devices are balls (103; 131; 153; 164).

11. Installation according to Claim 6, characterised in that the rolling devices are propelled through the track.

12. Installation according to Claim 6, characterised in that the sleeve comprises a box (161) for the distribution of propulsion fluid, communicating with the track so as to inject therein a propulsion fluid intended to cause the rolling devices to travel (164).

13. Installation according to Claim 6, characterised in that the balls are composed of active balls (131) of large diameter and spacer balls (132) of small diameter, the large diameter balls projecting from the open segments (104) of the meandering track while the small diameter balls keep the large diameter balls separated.

14. Installation according to Claim 6, characterised in that it has a modular structure, each stage consisting of a block equipped with at least one sleeve.

15. Installation according to Claim 6, characterised in that the diameter of the sleeve can be varied so that the sleeve can transmit forces onto the product being treated.

## Patentansprüche

1. Verfahren zur Behandlung eines Produktes (3₁...3ₙ; 3'₁...3'ₙ) in Form eines Rohres (1) bzw. einer Stange (1'), dadurch gekennzeichnet, dass das betreffende Produkt durch Behandlungszonen (Z₁...Zₙ; Z₁'...Zₙ') hindurchgeleitet wird, innerhalb welcher die Bedingungen des Druckes (P₁...Pₙ), der Temperatur (T₁...Tₙ) und einer Vibrationsfrequenz (F₁...Fₙ) entsprechend einem vorgegebenen Programm festgelegt werden, um auf diese Weise das zu behandelnde Produkt kontinuierlich einer rheologischen Behandlung auszusetzen, so dass die Bedingungen des Druckes, der Temperatur und der Vibrationsfrequenz sich auf das innerhalb der betreffenden Zone befindliche Material auswirken und alle Materialabschnitte des jeweiligen Produktes alle Zonen durchlaufen.

2. Vorrichtung zur Durchführung des Extrudionsverfahrens nach Anspruch 1, dadurch gekennzeichnt, dass dieselbe eine Mehrzahl von Stufen (E₁...Eₙ; E₁'...Eₙ') aufweist, durch welche das zu behandelnde Produkt aufeinderfolgend hindurchgeführt wird, wobei jeder Materialabschnitt des Produktes (3₁...3ₙ; 3₁'...3ₙ') den vorgegebenen Bedingungen des Druckes (P₁...Pₙ), der Temperatur (T₁...Tₙ) und der Vibrationsfrequenz (F₁...Fₙ) ausgesetzt wird, welche durch das Programm der rheologischen Behandlung für die jeweilige Stufe festgelegt ist und wobei jede von dem Produkt durchlaufende Stufe aus einem äusseren Bereich (Mₙ) und/oder einem inneren Bereich (Nₙ) besteht, durch welche das Produkt hindurchgführt ist.

3. Vorrichtung nach Anspruch 2, dadurch gekennzeichnet, dass der äussere Bereich durch einen unbeweglichen peripheren Kranz (20) gebildet ist, welcher eine Führungsfläche bildet und welcher die Aussenfläche des jeweiligen Produktes der der jeweiligen Stufe entsprechenden Temperatur aussetzt, während der innere Bereich jeweils durch eine drehbare Anordnung mit Rollen (25) gebildet ist, welche während der Behandlung an der Innenfläche des jeweiligen Abschnittes zum Ablauf gelangen, wobei diese Rollen dem innerhalb einer Druckkammer (23) vorhandenen Druck ausgesetzt sind, so dass die Innenfläche des jeweiligen Abschnittes des Produktes dem jeweiligen Druck und der Vibrationsfrequenz der jeweiligen Stufe ausgesetzt ist, und wobei die Anzahl von Rollen und die Drehgeschwindigkeit der auf der Innenfläche des jeweiligen Abschnittes vorgesehenen Rollen derart gewählt sind, dass die gewünschte Vibrationsfrequenz erreicht ist, während der durch die Druckkammer auf die Rollen ausgeübte Druck dem Druck der betreffenden Stufe entspricht.

4. Vorrichtung nach Anspruch 3, dadurch gekennzeichnet, dass die drehbare Anordnung des inneren Bereiches epizyklische Ritzel (21,22) aufweist, welche von einer Achse (26) angetrieben sind, die wenigstens für einen Teil der Stufen gemeinsam ist.

5. Vorrichtung zur Herstellung eines stabförmigen Produktes nach Anspruch 2, dadurch gekennzeichnet, dass die Stufen durch drehbare Anordnungen gebildet sind, bei welchen das zu behandelnde Produkt jeweils durch den Mittelpunkt hindurchgeführt ist, und dass diese drehbaren Anordnungen durch eine Anzahl von inneren Rollen (153) gebildet sind, welche jeweils innerhalb einer peripheren Druckkammer (152) angeordnet sind, wobei die Anordnung mit Hilfe einer äusseren Antriebsachse angetrieben ist, und wobei die Anzahl von Rollen und die Drehgeschwindigkeit dieser auf der Oberfläche des jeweiligen Abschnittes des zu behandelnden Produktes ablaufenden Rollen der Frequenz der betreffenden Stufe entspricht, während der innerhalb der Druckkammer herrschende, über die Rollen auf das Produkt übertragene Druck dem Druck der jeweiligen Stufe entspricht und die betreffenden Rollen auf der der Stufe zugeordneten Temperatur gehalten sind.

6. Vorrichtung nach Anspruch 2, dadurch gekennzeichnet, dass der innere Bereich und/oder der äussere Bereich jeder Stufe eine Buchse (101, 155) aufweist, welche direkt mit der Aussenfläche und/oder der Innenfläche des zu behandelnden Produktes in Eingriff gelangt, und dass diese Buchse mit wenigstens einem Zirkulationspfad (102) versehen ist, welche auf der Seite des zu behandelnden Produktes wenigstens teilweise mit einer Öffnung (105) versehen ist und welche Rollenelemente (103, 131, 153, 164) enthält, die teilweise durch die Öffnung des Zirkulationspfades hindurchtreten, um mit der Oberfläche des zu behandelnden Produktes in Eingriff zu gelangen.

7. Vorrichtung nach Anspruch 6, dadurch gekennzeichnet, dass der Zirkulationspfad (102) meanderförmig ausgebildet ist und Abschnitte (104,104') mit Rückführpfaden (106) aufweist, und dass wenigstens einige dieser Abschnitte (104) mit einer Öffnung (105) auf der Seite des zu behandelnden Produktes versehen sind.

8. Vorrichtung nach Anspruch 7, dadurch gekennzeichnet, dass die offenen Abschnitte (104) Längsabschnitte sind, welche sich in Bezug auf die Achse der Buchse in Längsrichtung erstrecken.

9. Vorrichtung nach Anspruch 6, dadurch gekennzeichnet, dass jeder zweite Abschnitt (104) des Zirkulationspfades offen ist, so dass die hervortretenden rollenden Elemente in derselben Richtung zirkulieren.

10. Vorrichtung nach Anspruch 6, dadurch gekennzeichnet, dass die Rollenelemente Kugeln (103, 131, 153, 164) sind.

11. Vorrichtung nach Anspruch 6, dadurch gekennzeichnet, dass die Rollenelemente entlang des Zirkulationspfades angetrieben sind.

12. Vorrichtung nach Anspruch 6, dadurch gekennzeichnet, dass die Buchse ein Verteilergehäuse (161) für ein Antriebsmedium aufweist, welches mit dem Zirkulationspfad in Verbindung steht, um auf diese weise das dem Antrieb der Rollenelemente (164) dienende Antriebsmedium einzuleiten.

13. Vorrichtung nach Anspruch 6, dadurch gekennzeichnet, dass die Kugeln aus aktiven Kugeln (131) grösseren Durchmessers und inaktiven Kugeln (132) kleineren Durchmessers bestehen, wobei die Kugeln grösseren Durchmessers aus den offenen Abschnitten des meanderförmigen Pfades hervortreten, während die Kugeln kleineren Durchmessers der gegenseitigen Trennung der Kugeln grösseren Durchmessers dienen.

14. Vorrichtung nach Anspruch 6, dadurch gekennzeichnet, dass dieselbe einen modularen Aufbau besitzt, wobei jede Stufe aus einem Block besteht, welcher wenigstens eine Buchse besitzt.

15. Vorrichtung nach Anspruch 6, dadurch gekennzeichnet, dass der Durchmesser der Buchse variabel ist, so dass dieselbe auf das zu behandelnde Produkt Kräfte übertragen kann.
